Europäisches Patentamt

European Patent Office

Office européen des brevets

(19)

(11) Veröffentlichungsnummer: **0 210 500**
**B1**

(12) **EUROPÄISCHE PATENTSCHRIFT**

(45) Veröffentlichungstag der Patentschrift:
**10.01.90**

(21) Anmeldenummer: **86109484.5**

(22) Anmeldetag: **11.07.86**

(51) Int. Cl.⁴: **G11B 5/84,** G11B 5/714,
G11B 5/842

(54) **Verfahren zur Herstellung von magnetischen Aufzeichnungsträgern.**

(30) Priorität: **24.07.85 DE 3526415**

(43) Veröffentlichungstag der Anmeldung:
**04.02.87 Patentblatt 87/6**

(45) Bekanntmachung des Hinweises auf die Patenterteilung:
**10.01.90 Patentblatt 90/2**

(84) Benannte Vertragsstaaten:
**DE FR GB NL**

(56) Entgegenhaltungen:
**DE-A- 2 250 384**
**DE-A- 3 109 765**

(73) Patentinhaber: **BASF Aktiengesellschaft,
Carl-Bosch-Strasse 38, D-6700 Ludwigshafen(DE)**

(72) Erfinder: **Kovacs, Jenoe, Dr., Kantstrasse 9,
D-6717 Hessheim(DE)**
Erfinder: **Engelhardt, Peter,
Johann-Strauss-Strasse 1-5, D-6831 Plankstadt(DE)**
Erfinder: **Roller, Hermann, Schwedlerstrasse 118,
D-6700 Ludwigshafen(DE)**
Erfinder: **Schwarz, Lothar, Albersbacher Strasse 70,
D-7602 Oberkirch(DE)**
Erfinder: **Nagel, Peter, Uhlandstrasse 5,
D-7608 Willstaett(DE)**

## Beschreibung

Die Erfindung betrifft ein Verfahren zur Herstellung von magnetischen Aufzeichnungsträgern durch Dispergieren von pulverförmigem magnetischem Material mit Hilfe einer üblichen Dispergiereinrichtung in einem Gemisch aus Lösungsmittel, organischem Polymerbindemittel, Dispergierhilfsmittel und weiteren üblichen Zusatzstoffen, schichtförmiges Auftragen der resultierenden Dispersion auf ein Trägermaterial und anschließendes Verfestigen der Schicht.

Die Herstellung von pulverförmigem magnetischem Material enthaltenden Dispersionen im Rahmen der Produktion von magnetischen Aufzeichnungsträgern ist bekannt. Diese Dispersionen bestehen aus einem pulverförmigen magnetischen Material, einem Lösungsmittel oder -gemisch, mindestens einem in diesem Lösungsmittel(gemisch) löslichen oder dispergierbaren organischen Polymeren oder Präpolymeren, Dispergierhilfsmittel und weiteren organischen und/oder anorganischen Zusatzstoffen, wie Gleitmittel, Viskositätsregulatoren, Stabilisatoren, inerte anorganische Substanzen zur Regulierung der Leitfähigkeit, des Abriebs, der Rauhigkeit usw. Die Bereitung der Dispersionen aus den angeführten Komponenten geschieht in Dispergiereinrichtungen, im allgemeinen Mühlen genannt, mit deren Hilfe durch das Einwirken eines hohen Schergefälles, die pulverförmigen Materialien weitgehend in ihre Einzelteilchen getrennt und mit dem Bindemittel umhüllt werden. Bedingt durch die Art der Herstellung als auch durch die sich daran anschließende Aufbereitung der magnetischen Materialien entstehen aus Einzelteilchen aufgebaute Agglomerate mit sehr unterschiedlichem Sekundärteilchendurchmesser. Zur Herstellung hochwertiger magnetischer Aufzeichnungsträger ist es aber erforderlich, daß die meist nadelförmigen magnetischen Teilchen als weitgehend gleichförmige Einzelteilchen in einer vorgegebenen der Aufzeichnungsrichtung ·entsprechenden Vorzugsrichtung und in gleichen Abständen zueinander vorliegen, wobei die möglichst kleinen Zwischenräume mit Bindemittel ausgefüllt sind und keine Luft- oder sonstigen Fremdstoffeinschlüsse aufweisen. Entsprechend diesen Forderungen sollte die Dispergierung schonend erfolgen, d.h. beim Dispergiervorgang in diskontinuierlichen Kugelmühlen, Rührwerksmühlen, kontinuierlichen Rohrmühlen oder durch Kesselmahlung weitgehend so, daß die Agglomerate zerstört werden, ohne daß Einzelnadeln brechen.

Die bekannten Dispergierverfahren haben jedoch eine Reihe von allerdings artspezifischen Nachteilen. Der gesamte Dispergierprozeß verläuft meist langsam, wenn Vorkehrungen für eine schonende Dispergierung getroffen werden. Nachteilig bei den bekannten Mahlverfahren sind neben der geringen Packungsdichte ein hoher Feinstkornanteil, welcher bei Verarbeitung des Materials zu einer Dispersion zu Benetzungsschwierigkeiten und so zu einem besonders hohen Lösungsmittelbedarf führt, außerdem die Beschädigung der Pigmentstruktur, da bei noch nicht vollständig zerteilten Agglomeraten die Einzelpigmentnadeln bereits teilweise zerbrochen werden. Wird dagegen zur schonenden Einarbeitung des magnetischen Materials der beim Dispergieren vorhandene Anteil an Polymeren erhöht, dann steigt der erforderliche Mahlaufwand. Um diesen zu verringern wurden bereits Hochenergiemühlen, das sind Dispergiermaschinen mit hoher örtlicher Energiedichte, wie z.B. Rührwerkskugelmühlen, Planetenkugelmühlen, Sandmühlen oder Attritoren eingesetzt.

Aufgabe der Erfindung war es daher, ein Verfahren zur Herstellung von magnetischen Aufzeichnungsträgern bereitzustellen, das die angeführten Nachteile nicht aufweist. Insbesondere war es Aufgabe der Erfindung, die Dispergierung der magnetischen Materialien so zu gestalten, daß bei einer deutlichen Verringerung des Dispergieraufwandes sehr homogene und stabile Dispersionen erzielt weren, wodurch zudem eine wesentliche Verbesserung der magnetischen Eigenschaften und somit der Aufzeichnungseigenschaften der resultierenden magnetischen Aufzeichnungsträger bewirkt wird.

Es wurde nun gefunden, daß sich bei einem Verfahren zur Herstellung von magnetischen Aufzeichnungsträgern gemäß dem Oberbegriff des Patentanspruchs die Aufgabe in einfacher Weise lösen läßt, wenn die Dispersion in einer Rührwerksmühle, welche mit Mahlköpern mit einem Durchmesser von über 0,2 mm, einer Dichte von 3,5 bis 4,2 g/cm³ und einer Mohs'schen Härte von 7 bis 8,5 gefüllt ist, hergestellt wird und daß die Viskosität der resultierenden Dispersionen mindestens 100 mPas (gemessen bei 25°C) beträgt, mit der Maßgabe, daß das eingesetzte magnetische Material eine spezifische Oberfläche nach BET von mindestens 23 g²/g aufweist.

Als Mahlkörper für das erfindungsgemäße Verfahren sind insbesondere kugelförmige zirkoniumoxidhaltige keramische Mahlkörper geeignet. Besonders vorteilhaft sind solche, die aus 60 bis 80 Gew.% Zirkoniumoxid und 20 bis 40 Gew.% Siliciumoxid bestehen. Gegebenenfalls sind auch entsprechende Materialien mit einem Anteil an Aluminiumoxid verwendbar.

Die für das erfindungsgemäße Verfahren geeigneten keramischen Mahlkörper sind kugelförmig mit einem Durchmesser von größer 0,2, vorzugsweise 0,2 bis 3,0 mm, insbesondere von 0,8 bis 1,5 mm. Mahlkörper mit einem kleineren Durchmesser beschleunigen zwar deutlich die Dispergierung, sie lassen sich jedoch nur noch sehr schwer von der fertigen Dispersion abtrennen. Werden dagegen Mahlkörper mit einem größeren Durchmesser eingesetzt, so verlängert sich die Dispergierzeit. Außerdem tritt mit dickeren Kugeln eher eine Beschädigung des zu dispergierenden Materials auf.

Die Herstellung der Dispersion nach dem erfindungsgemäßen Verfahren erfolgt in der Weise, daß das magnetische Material, das Dipsergierhilfsmittel, das Lösungsmittel und das gelöste Bindemittel sowie gegebenenfalls weitere Zusatzstoffe in die mit den speziellen keramischen Mahlkörpern gefüllte Rührwerksmühle eingebracht werden. Das Verfahren kann in ein- oder zweistufiger Fahrweise durchgeführt werden. Beim einstufigen Dispergierverfahren wird die gesamte, in Lösungsmitteln gelöste Bindemittelmenge schon vor Anfang des Mahlvorganges zugesetzt. Beim meist durchgeführten zweistufigen Verfahren wird lediglich ein Teil, meist ein Drittel bis zur Hälfte der gesamten Bindemittelmenge vor Beginn des Mahlvorgangs zugesetzt und die restliche Menge erst dann eingerührt, wenn die Dispersion bereits homogen ist. Zur einwandfreien Verarbeitung der Dispersion ist es angebracht, wenn die Dispersion eine Viskosität von mindestens 100 mPas (gemessen bei 25°C), insbesondere bis zu 600 mPas aufweist.

Die Zusammensetzung der Dispersion, welche im Rahmen des erfindungsgemäßen Verfahrens zur Herstellung von magnetischen Aufzeichnungsträgern verwendet wird, entspricht ansonsten dem Stand der Technik.

Als magnetische Materialien werden bevorzugt feinteiliges nadelförmiges Gamma-Eisen(III)oxid mit einer durchschnittlichen Teilchengröße von 0,1 bis 2 µm und insbesondere von 0,1 bis 0,9 µm oder stäbchenförmiges Chromdioxid der gleichen Teilchenstruktur, wie beim Eisenoxid angegeben, verwendet. Weitere geeignete Materialien sind Gamma-Eisen(III)oxid mit Dotierungen von Schwermetallen, insbesondere von Kobalt, feinteilige Metall-Legierungen von Eisen, Kobalt und/oder Nickel sowie geeignete Ferritmaterialien. Bevorzugt werden magnetische Materialien, welche sehr feinteilig sind und insbesondere eine spezfische Oberfläche nach BET von mindestens 23 m²/g, bevorzugt mindestens 26 m²/g, aufweisen. Die spezifische Oberfläche wurde gemäß DIN 66123 mittels eines Ströhlein-Areameters der Fa. Ströhlein, Düsseldorf, BRD nach dem Einpunkt-Differenzverfahren nach Haul und Dümbgen bestimmt.

Als Bindemittel für die Dispersion des feinteiligen magnetischen Materials können die für die Herstellung von Magnetschichten bekannten Bindemittel verwendet werden, wie ein in üblichen Lösungsmitteln lösliches Copolyamid, ein Polyvinylformal, ein Polyurethanelastomer, Mischungen von Polyisocyanaten und höhermolekularen Polyhydroxylverbindungen oder Vinylchloridcopolymerisate mit über 60 % an Vinylchlorid-Molekülbausteinen, z.B. ein Vinylchloridcopolymerist mit einem oder mehreren Comonomeren, wie ein Vinylester einer Monocarbonsäure mit 2 bis 9 C-Atomen, oder ein Ester eines aliphatischen Alkohols mit 1 bis 9 C-Atomen und einer ethylenisch ungesättigten Carbonsäure mit 3 bis 5 C-Atomen, wie die Ester der Acrylsäure, Methacrylsäure oder Maleinsäure, oder ein Copolymer des Vinylchlorids mit einer oder mehreren dieser Carbonsäuren selbst als Comonomerem oder hydroxylgruppenhaltige Vinylchloridcopolymerisate, die durch partielle Verseifung von Vinylchlorid-Vinylester-Copolymerisaten oder direkte Copolymerisation von Vinylchlorid mit hydroxylgruppenhaltigen Monomeren, wie Allylalkohol oder 4-Hydroxybutyl- oder 2-Hydroxyethyl-(meth)-acrylat hergestellt werden können. Ferner sind als Bindemittel geeignet Abmischungen von einem oder mehreren Polyurethanelastomeren mit Polyvinylformalen, Phenoxyharzen und PVC-Copolymerisaten der oben angegebenen Zusammensetzung.

Als Polyurethanelastomere-Binder werden handelsübliche elastomere Polyurethane aus Adipinsäure, 1,4-Butandiol und 4,4'-Diisocyanatodiphenylmethan bevorzugt angewandt. Ebenfalls vorteilhaft sind OH-gruppenhaltige Polyharnstoffurethanbindemittel, die mit Polyisocyanat vernetzt werden und wobei das OH-gruppenhaltige Polyharnstoffurethan durch Umsetzung eines Polydiols, eines Diols und eines primären oder sekundären Aminoalkohols und gegebenenfalls eines Triols mit einem Diisocyanat erhalten wird.

Magnetdispersionen, die sich besonders für die Herstellung von starren magnetischen Aufzeichnungsplatten eignen, enthalten bevorzugt Bindemittel wie Epoxidharze, Phenoxyharze, Aminoplast-vorkondensate, Polyesterharze, Polyurethane oder Polyurethanbildner und Mischungen solcher Bindemittel miteinander als auch mit anderen Bindemitteln, wie Polycarbonaten oder Vinylpolymeren, z.B. Vinylchlorid- oder Vinylidenchlorid-Copoloymere oder hitzehärtbare Acrylat- oder Methacrylat-Copoylmere.

Den Dispersionen können weitere Zusatzstoffe zur Herstellung der Magnetschichten, beispielsweise geringe Monocarbonsäurenteile, Gemische oder Ester derselben sowie Füllstoffe, wie Ruß, Graphit, Quarzmehl, unmagnetisches $\alpha$-$Fe_2O_3$ und/oder Pulver auf Silicatbasis und Mittel zur Verbesserung des Verlaufs, wie geringe Mengen Siliconöl, zugesetzt werden. Diese Zusätze sollen zweckmäßigerweise insgesamt 12 Gew.%, bevorzugt 8 Gew.%, bezogen auf das magnetische Material, nicht überschreiten.

Die Magnetdispersion wird mit Hilfe üblicher Beschichtungsmaschinen, z.B. mittels eines Linealgießers, auf den nichtmagnetisierbaren Träger aufgetragen. Als nichtmagnetische und nichtmagnetisierbare Träger lassen sich die üblichen Trägermaterialien verwenden, insbesondere Folien aus linearen Polyestern, wie Polyethylenterephthalat, im allgemeinen in Stärken von 1 bis 200 µm und insbesondere von 6 bis 36 µm. Bevor die noch flüssige Beschichtungsmischung auf dem Träger getrocknet wird, was zweckmäßigerweise bei Temperaturen von 50 bis 90°C während 2 bis 5 Minuten geschieht, werden die anisotropen Magnetteilchen gegebenenfalls durch die Einwirkung eines Magnetfeldes entlang der vorgesehenen Aufzeichnungsrichtung orientiert. Anschließend können die Magnetschichten auf üblichen Maschinen durch Hindurchführen zwischen geheizten und polierten Walzen geglättet und verdichtet werden. Die Dicke der Magnetschicht beträgt im allgemeinen 1 bis 10 µm.

Mit dem erfindungsgemäßen Verfahren lassen sich in überraschender Weise insbesondere äußerst feinteilige magnetische Teilchen, vor allem solche mit einer spezifischen Oberfläche nach BET von mindestens 23 m²/g, welche für hochaussteuerbare, ein geringes Rauschen aufweisende magnetische Aufzeichnungsträger erforderlich sind, in einfacher und die Teilchenform nahezu nichtschädigender Weise dispergieren. Vor allem bei magnetischen Aufzeichnungsträgern für die Bildaufzeichnung sind sowohl hohe magnetische Werte, geringe Teilchengröße, weitgehend einheitlichen Teilchengrößenverteilung und homogener Beschichtungsaufbau zur Gewährleistung hoher Qualität erforderlich. Gerade diese meist gegenläufigen Eigenschaftsprofile lassen sich mit dem erfindungsgemäßen Verfahren in besonders vorteilhafter Weise lösen.

Die Erfindung sei anhand folgender Beispiele im Vergleich zu Versuchen nach dem Stand der Technik näher erläutert.

Beispiel 1

700 Teile eines nadelförmigen Eisenpulvers mit einer mittleren Teilchenlänge von 0,3 µm, einer spezifischen Oberfläche nach BET von 44 m²/g und einer Koerzitivfeldstärke von 109 kA/m wurden zusammen mit 91 Teilen eines kugelförmigen $Al_2O_3$-Pulvers mit einem mittleren Teilchendurchmesser von 0,6 µm in 722,8 Teilen einer 13 %igen Lösung eines thermoplastischen Polyesterurethans aus Adipinsäure, Butandiol-1,4 und 4,4'-Diisocyanatodiphenylmethan in einem Gemisch aus gleichen Teilen Tetrahydrofuran und Dioxan, 201,3 Teilen einer 20 %igen Lösung eines Phenoxiharzes aus Bisphenol A und Epichlorhydrin mit einem mittleren Molgewicht von 30.000 und einem Hydroxylgruppengehalt von 6 % im obengenannten Lösungsmittelgemisch sowie weiteren 264,1 Teilen dieses Lösungsmittelgemisches in einer 6.000 Volumenteile fassenden, mit 2330 Teilen Kugeln, bestehend aus 69 % $ZrO_2$ und 31 % $SiO_2$ mit einem Durchmesser zwischen 1 und 1,5 mm, gefüllten Rührwerkmühle unter Zusatz von 3,5 Teilen Stearinsäure und 55,4 Teilen eines Dispergierhilfsmittels auf der Basis einer Mischung eines ethoxylierten Monophosphorsäureesters und dem Salz eines Sulfobernsteinsäureethylhexylesters 32 Stunden dispergiert. Anschließend wurden 23,7 Teilen Methylstearat zugeführt und nochmals 5 Stunden dispergiert. Nach Beendigung der Dispergierung wurden 46,7 Teile einer 50 %igen Lösung eines Triisocyanats, gefertigt aus 3 Molen Toluylendiisocyanat und 1 Mol 1,1,1-Trimethylolpropan in Ethylacetat, hinzugefügt und weitere 15 Minuten gerührt. Nach dem Filtrieren der Dispersion wurde diese schichtförmig auf eine 10 µm dicke Polyethylenterephthalatfolie unter gleichzeitiger Ausrichtung der Magnetpartikel mittels eines Permanentmagneten aufgetragen. Die nach dem Trocknen 3 µm dicke Magnetschicht wurde durch Hindurchführen zwischen beheizten Walzen unter Druck (90°C, Liniendruck 200 kg/cm) geglättet und die beschichtete Folienbahn in 1/2 Zoll breite Bänder geschnitten.

Die Messung der magnetischen Eigenschaften wurde in einem Meßfeld von 800 kA/m durchgeführt. Die Oberflächenrauhigkeit wurde als gemittelte Rauhtiefe $R_Z$ gemäß DIN 4768, Blatt 1 bestimmt. Die Videoeigenschaften wurden gegen das $CrO_2$-Bezugsband auf einem VHS-Recorder der Firma Victor Company of Japan ermittelt. Die Meßergebnisse sind in der Tabelle 1 angegeben.

Vergleichsversuch 1

Es wurde wie in Beispiel 1 beschrieben verfahren, jedoch wurden anstatt der Mahlkörper auf Basis $ZrO_2$ 4200 Teile Steatit-Kugeln mit einem mittleren Durchmesser von 1,3 mm eingesetzt. Die Meßergebnisse sind in der Tabelle 1 angegeben.

Vergleichsversuch 2

Es wurde wie in Beisiel 1 beschrieben verfahren, jedoch wurden anstatt der Mahlkörper auf Basis $ZrO_2$ 8000 Teile Stahlkugeln mit einem Durchmesser von 2 mm eingesetzt. Die erforderliche Dispergierzeit betrug 168 Stunden. Die Meßergebnisse sind in Tabelle 1 angegeben.

Vergleichsversuch 3

Der Ansatz gemäß Beispiel 1 wurde in einer Rührwerkskugelmühle der Fa. Feinmahltechnik Netzsch, Selb, unter Einsatz von 1500 Teilen Glaskugeln mit einem Durchmesser von 2 mm als Mahlkörper 93 Stunden lang dispergiert. Bei einer Filtration der Dispersion waren sehr viele Glasbruchstücke im Filterrückstand.

Die Meßergebnisse sind in Tabelle 1 angegeben.

Vergleichsversuch 4

Es wurde wie in Vergleichsversuch 3 beschrieben verfahren, jedoch wurden anstatt der Glaskugeln 4200 Teile Stahlkugeln mit einem Durchmesser von 2 mm als Mahlkörper eingesetzt. Die Dispergierdauer betrug 37 Stunden. Die Meßergebnisse sind in Tabelle 1 angegeben.

Tabelle 1

| | Beispiel | Vergleichsbeispiel | | | |
|---|---|---|---|---|---|
| | 1 | 1 | 2 | 3 | 4 |
| Rauhigkeit R$_z$ [µm] | 0,18 | 0,18 | 0,18 | 0,17 | 0,16 |
| **Magnetwerte** | | | | | |
| Koerzitivfeldstärke H$_c$ [kA/m] | 107,6 | 103,1 | 101,2 | 104,5 | 102,3 |
| remanente Magnetisierung Mr [mT] | 307 | 268 | 275 | 283 | 271 |
| magnet. Ausrichtfaktor RF | 1,9 | 1,5 | 1,5 | 1,7 | 1,8 |
| **Videoeigenschaften** | | | | | |
| Luminanz S/N [dB] | +9 | +5,5 | +4,5 | +6 | +5,5 |
| Chroma S/N [dB] | +5 | +4,0 | +4,0 | +3,5 | +2,5 |
| Fehlerzahl [D.0/min] | 150 | 450 | 150 | >3000 | 300 |

**Beispiel 2**

853 Teile einer 1,5 %igen Lösung eines thermoplastischen Polyesterurethans aus Adipinsäure, Butandiol-1,4 und 4,4'-Diisocyanatodiphenylmethan in einem Gemisch aus gleichen Teilen Tetrahydrofuran und Dioxan sowie 123 Teile einer 20 %igen Lösung eines Phenoxyharzes aus Bisphenol A und Epichlorhydrin im gleichen Lösungsmittelgemisch wurden mit 1200 Teilen eines Chromdioxids mit einer Koerzitivfeldstärke von 48,5 kA/m und einer spezifischen Oberfläche nach BET von 28,0 m²/g, 3,0 Teilen Zinkoleat und weiteren 880 Teilen des genannten Lösungsmittelgemischs in einer 6000 Volumenteilen fassenden und mit 2500 Teilen Kugeln, bestehend aus 69 % ZrO$_2$ und 31 % SiO$_2$ mit einem Durchmesser zwischen 1 und 1,5 mm gefüllten Rührwerkskugelmühle 72 Stunden dispergiert. Anschließend wurden nochmals 853 Teile der genannten Polyesterurethanlösung und 132 Teile der Phenoxyharzlösung sowie 36 Teile Butylstearat, 6 Teile Stearinsäure und 533 Teile des genannten Lösungsmittelgemisches zugegeben und nochmals 24 Stunden dispergiert. Die erhaltene Dispersion wurde unter Druck durch einen Filter mit 1 µm Poren filtriert, mit 13 Teilen einer 50 %igen Lösung eines Triisocyanats, aus 3 Molen Toluylendiisocyanat und 1 Mol 1,1,1-Trimethylolpropan, in Ethylacetat je kg Dispersion versetzt und auf eine 14,5 µm dicke Polyethylenterephthalatfolie mittels eines üblichen Linealgießers aufgetragen.

Die beschichtete Folie wurde nach Durchlaufen eines Magnetfeldes zur Ausrichtung der magnetischen Teilchen bei Temperaturen zwischen 60 und 80°C getrocknet. Nach der Trocknung wurde die Magnetschicht der beschichteten Folie durch zweimaliges Hindurchführen zwischen beheizten Walzen (85°C unter einem Liniendruck von 35 kg/cm) verdichtet und geglättet. Die Dicke der Magnetschicht betrug dann 3 µm. Nach dem Schneiden der beschichteten Folie in 1/2 Zoll breite Videobänder wurden diese auf einem handelsüblichen V 2000 Recorder der Firma Grundig mit einer Geschwindigkeit von 2,44 cm/sec gegen das Bezugsband (0 dB) geprüft. Die magnetischen Eigenschaften wurden in einem Meßfeld von 160 kA/m bestimmt. Die Meßergebnisse sind in Tabelle 2 angegeben.

**Vergleichsversuch 5**

Es wurden wie in Beispiel 2 beschrieben verfahren, jedoch wurden anstatt der Kugeln auf Basis ZrO$_2$ 8000 Teile Stahlkugeln mit einem Durchmesser von 4 mm eingesetzt und 168 Stunden lang dispergiert. Die Meßergebnisse sind in Tabelle 2 angegeben.

**Beispiel 3**

810 Teile eines cobaltmodifizierten Eisenoxids mit einer Koerzitivfeldstärke von 49 kA/m und einer spezifischen Oberfläche nach BET von 28 m²/g wurden zusammen mit 90 Teilen eines Chromdioxidpulvers gemäß Beispiel 2, sowie 27 Teilen kugelförmiger Al$_2$O$_3$-Teilchen auf einem mittleren Durchmesser von 0,4 µm, 27 Teilen Natriumoleat, 601 Teilen einer 12,5 %igen Lösung eines thermoplastischen Polyesterurethans aus Adipinsäure, Butandiol-1,4 und 4,4'-Diisocyanatodiphenylmethan in einem Gemisch aus gleichen Teilen Tetrahydrofuran und Dioxan, 94 Teilen eines Copolymeren aus 91 Teilen Vinylidenchlorid und 9 Teilen Vinylacetat und weiteren 660 Teilen des Lösungsmittelgemisches aus gleichen Teilen Tetrahydrofuran und Dioxan in einer Rührwerkskugelmühle gefüllt mit 2500 Teilen Kugeln, bestehend aus 69 % ZrO$_2$ und 31 % SiO$_2$ mit einem Durchmesser zwischen 1 und 1,5 mm, 72 Stunden lang dispergiert. Anschließend wurden 781 Teile der genannten Polyurethanlösung, 122 Teile des Copolymeren, 27 Teile Methylstearat, 4,5 Teile Stearinsäure und 150 Teile des Lösungsmittelgemisches zugesetzt und nochmals 24 Stunden dispergiert. Die Dispersion wurde wie in Beispiel 2 beschrieben weiterverarbeitet und die erhaltenen Videobänder entsprechend geprüft. Die Meßergebnisse sind in Tabelle 2 angegeben.

Vergleichsversuch 6

Es wurde wie in Beispiel 3 beschrieben verfahren, jedoch wurden anstatt der Kugeln auf Basis $ZrO_2$ 8000 Teile Stahlkugeln mit einem Durchmesser von 4 mm eingesetzt und 168 Stunden dispergiert. Die Meßergebnisse sind in Tabelle 2 angegeben.

Tabelle 2

| | Bsp. 2 | Vergl.-vers. 5 | Bsp. 3 | Vergl.-vers. 6 |
|---|---|---|---|---|
| Rauhigkeit $R_z$ [μm] | 0,14 | 0,13 | 0,16 | 0,15 |
| Magnetwerte | | | | |
| Koerzitivfeldstärke $H_c$ [kA/m] | 49,6 | 50,0 | 55,9 | 54,1 |
| remanente Magnetisierung Mr [mT] | 166 | 131 | 168 | 132 |
| magnet. Ausrichtfaktor RF | 2,9 | 1,72 | 2,2 | 1,43 |
| Videoeigenschaften | | | | |
| Luminanz S/N [dB] | +1,8 | +0,8 | +1,2 | +0,2 |
| Chroma S/N [dB] | +2,8 | +1,2 | +2,4 | +1,2 |
| Fehlerzahl [0.0/min] | 32 | 50 | 26 | 65 |

Beispiel 4

700 Teile eines nadelförmigen Eisenpulvers mit einer mittleren Teilchenlänge von 0,3 μm, einer spezifischen Oberfläche nach BET von 43 m²/g und einer Koerzitivfeldstärke von 81 kA/m wurden zusammen mit 95,2 Teilen kugelförmigem $Al_2O_3$-Pulver mit einem mittleren Teilchendurchmesser von 0,4 μm in 377 Teilen einer 13 %igen Lösung eines thermoplastischen Polyesterurethans aus Adipinsäure, Butandiol-1,4 und 4,4'-Diisooyanatodiphenylmethan in einem Gemisch aus gleichen Teilen Tetrahydrofuran und Dioxan, 105 Teilen einer 20 %igen Lösung eines Phenoxiharzes aus Bisphenol A und Epichlorhydrin mit einem mittleren Molgewicht von 30.000 und einem Hydroxylgruppengehalt von 6 % im obengenannten Lösungsmittelgemisch sowie weiteren Teilen dieses Lösungsmittelgemisches in einer 6.000 Volumenteile fassenden, mit 2500 Teilen Kugeln, bestehend aus 69 % $ZrO_2$ und 31 % $SiO_2$ mit einem Durchmesser zwischen 1 und 1,5 mm gefüllten Rührwerk mühle unter Zusatz von 14 Teilen eines handelsüblichen Fließverbesserers auf Basis eines Alkylammoniumsalzes dimerer Fettsäuren und 42 Teilen eines Dispergierhilfsmittels auf der Basis einer Mischung eines ethoxylierten Monophosphorsäureesters und dem Salz eines Sulfobernsteinsäureethylhexylesters 72 Stunden dispergiert. Anschließend wurde die Dispersion mit 161 Teilen der genannten Polyurethanlösung, 45 Teilen der Phenoxiharzlösung sowie 10,4 Teilen eines Silikonöls und 35 Teilen Stearinsäure versetzt und 54 Stunen nachdispergiert. Nach Beendigung der Dispergierung wurden der Dispersion 59,6 Teile einer 50 %igen Lösung eines Triisocyanats aus 3 Mol Toluylendiisocyanat und 1 Mol 1,1,1-Trimethylolpropan in Ethylacetat zugegeben und 15 Minuten gerührt. Die Dispersion wurde mittels eines üblichen Linealgießers auf einer 6 μm dicke Polyethylenterephthalatfolie aufgetragen. Die beschichtete Folie wurde nach Durchlaufen eines Magnetfeldes zum Ausrichten der Magnetteilchen bei Temperaturen zwischen 50 und 90°C getrocknet. Nach der Trocknung wurde die Magnetschicht durch Hindurchziehen zwischen auf 70°C beheizten Walzen unter einem Liniendruck von 200 kg/cm verdichtet und geglättet, so daß die Dicke der Magnetschicht 4,5 μm betrug und dann in 3,81 mm breite Bänder für Audioanwendung geschnitten.

Die Rauhigkeit der Magnetschicht wurde wie in Beispiel 1 beschrieben gemessen. Die Messung der magnetischen Eigenschaften wurde in einem Meßfeld von 100 kA/m durchgeführt. Die elektroakustischen Werte wurden gemäß DIN 45 401, DIN 45 403 und DIN 45 512, Bl. 12 gegen das Bezugsband IEC I durchgeführt. Die Meßergebnisse sind in Tabelle 3 angegeben.

Vergleichsversuch 7

Das Beispiel 4 wurde unter Einsatz von 1500 Teile Glaskugeln mit einem Durchmesser von 2 mm als Mahlkörper wiederholt. Die Meßergebnisse sind in der Tabelle 3 angegeben.

Tabelle 3

|  | Beispiel 4 | Vergleichs-versuch 7 |
|---|---|---|
| Schichtstärke [$\mu$m] | 3,1 | 3,2 |
| Rauhigkeit R$_z$ [$\mu$m] | 0,16 | 0,15 |
| Koerzitivfeldstärke H$_c$ [kA/m] | 83,3 | 83,3 |
| remanente Magnetisierung Mr [mT] | 375 | 312 |
| Richtfaktor | 2,3 | 2,2 |
| Elektroakustische Daten: | | |
| gegen Bezugsband IEC I: | | |
| Empfindlichkeit 315 Hz (db) | 0 | –1,3 |
| " 10 kHz (db) | +0,5 | –1,1 |
| Aussteuerbarkeit 315 Hz (db) | +1,0 | –1,1 |
| " 10 kHz (db) | +1,5 | –0,5 |

## Patentansprüche

1. Verfahren zur Herstellung von magnetischen Aufzeichnungsträgern durch Dispergieren von feinteiligem magnetischem Material in einem Gemisch aus Lösungsmittel, organischem Polymerbindemittel, Dispergierhilfsmittel und weiteren üblichen Zusatzstoffen, schichtförmiges Auftragen der Dispersion auf ein Trägermaterial und anschließendes Verfestigen der Schicht, dadurch gekennzeichnet, daß die Dispersion in einer Rührwerksmühle, welche mit Mahlkörpern einer Größe von über 0,2 mm, einer Dichte von 3,5 bis 4,2 g/cm$^3$ und einer Mohs'schen Härte von 7 bis 8,5 gefüllt ist, hergestellt wird und daß die Viskosität der resultierenden Dispersion bei einer Temperatur von 25°C mindestens 100 mPas beträgt mit der Maßgabe, daß das eingesetzte feinteilige magnetische Material eine Oberfläche nach BET von mindestens 23 m$^2$/g aufweist.

2. Verfahren gemäß Anspruch 1, dadurch gekennzeichnet, daß die Dispersion in einer Rührwerksmühle, welche mit kugelförmigen keramischen Mahlkörpern, bestehend aus 60 bis 80 Gew.% ZrO$_2$ und 20 bis 40 Gew.% SiO$_2$, mit einem mittleren Durchmesser von 0,2 bis 3 mm gefüllt ist, hergestellt wird.

## Claims

1. A process for the production of magnetic recording media by dispersing finely devided magnetic material in a mixture of a solvent, an organic polymer binder, a dispersant and other conventional additives, applying the dispersion in the form of a layer on a base and then compacting the layer, wherein the dispersion is prepared in a stirred ball mill which is charged with a grinding medium comprising balls of more than 0.2 mm diameter and having a density of from 3.5 to 4.2 g/cm$^3$ and a Mohs hardness of from 7 to 8.5, and the viscosity of the resulting dispersion, measured at 25°C, is not less than 100 mPa.s, with the proviso that the finely divided magnetic material employed has a BET specific surface area of not less than 23 m$^2$/g.

2. A process as claimed in claim 1, wherein the dispersion is prepared in a stirred ball mill which is charged with a grinding medium comprising ceramic balls consisting of form 60 to 80% by weight of ZrO$_2$ and from 20 to 40% by weight of SiO$_2$ and having a mean diameter of from 0.2 to 3 mm.

## Revendications

1. Procédé de fabrication de supports d'enregistrement magnétiques par dispersion de matériaux magnétiques finement divisés dans un mélange de solvant, liant polymère organique, auxiliaire de dispersion et autres additifs usuels, application en couche de la dispersion sur un matériau support et ensuite durcissement de la couche, caractérisé par le fait que la dispersion est préparée dans un broyeur-agitateur, qui est rempli de corps de broyage d'une grosseur supérieure à 0,2 mm, d'une densité de 3,5 à 4,2 g/cm$^3$ et d'une dureté Mohs de 7 à 8,5, et que la viscosité de la dispersion résultante est, à une température de 25°C, d'au moins 100mPas, avec la condition que le matériau magnétique finement divisé, utilisé, ait une surface selon BET d'au moins 23 m$^2$/g.

2. Procédé selon la revendication 1, caractérisé par le fait que la dispersion est préparée dans un broyeur-agitateur qui est rempli de corps de broyage céramiqes sphériques, constitués de 60 à 80% en poids de ZrO$_2$ et 20 à 40% en poids de SiO$_2$, d'un diamètre moyen de 0,2 à 3 mm.